# EUROPÄISCHE PATENTSCHRIFT

(11) **EP 2 534 726 B1**
(45) Veröffentlichungstag und Bekanntmachung des Hinweises auf die Patenterteilung: **11.11.2015**
(21) Anmeldenummer: 11702832.4
(22) Anmeldetag: 08.02.2011
(51) Int. Cl.: H01M 10/42, H01M 10/48, H02J 7/00, H01M 10/052, H01M 10/0563, B60L 11/00, B60L 11/18

(54) **Hochstrombatteriesystem und Verfahren zur Steuerung eines Hochstrombatteriesystems**
High voltage battery system and method for controlling same
Système de batterie à courant élevé et procédé de commande d'un système de batterie à courant élevé

(30) Priorität: 08.02.2010 EP 10001270
(43) Veröffentlichungstag der Anmeldung: 19.12.2012
(73) Patentinhaber: Alevo Research AG, 6304 Zug (CH)
(72) Erfinder: HAMBITZER, Günther, 53115 Bonn (DE); HEITBAUM, Joachim, 53115 Bonn (DE); BORCK, Markus, 70567 Stuttgart (DE); RIPP, Christiane, 76327 Pfinztal (DE)
(74) Vertreter: Durm, Frank
(86) Internationale Anmeldenummer: PCT/EP2011/051769
(87) Internationale Veröffentlichungsnummer: WO 2011/095630

(56) Entgegenhaltungen:
- EP-A1- 1 923 934
- WO-A1-96/22625
- JP-B- 4 017 831
- US-A- 4 287 267

## Beschreibung

Die vorliegende Erfindung betrifft ein Hochstrombatteriesystem, in dem ein hoher Betriebsstrom fließt und das insbesondere für Fahrzeugantriebe geeignet ist. Das Hochstrombatteriesystem umfasst eine Mehrzahl von Batteriemodulen, die jeweils mindestens eine wiederaufladbare Batteriezelle (Akkumulatorzelle) einschließen und die derartig mittels einer Betriebsstromleitung elektrisch in Reihe geschaltet sind, dass im Betrieb ein Betriebsstrom durch die Betriebsstromleitung fließt.

Hochstrombatteriesysteme finden in vielen mobilen Geräten Anwendung, bei denen eine hohe Kapazität gefordert ist und hohe Ströme im Bereich von mehreren zehn oder hundert Ampere fließen können. Beispiele für den Einsatz von Hochstrombatteriesystemen sind mobile Werkzeuge oder auch Fahrzeuge, insbesondere Elektrofahrzeuge, bei denen in der Regel Maximalströme im Bereich von 100 A bis ca. 400 A fließen. Aber auch bei anderen elektrischen Geräten, insbesondere solchen, die einen Motor umfassen und für den Start des Motors hohe Ströme erfordern, ist ein Hochstrombatteriesystem erforderlich.

Es ist im Stand der Technik bekannt, dass beim Einsatz von Batteriesystemen eine Überwachung von einzelnen Batteriezellen notwendig ist, um Risiken einer Beschädigung oder Zerstörung der Batterien zu vermeiden, die beispielsweise durch Überladen oder durch Fehler innerhalb der Batterie auftreten können.

Um bei einem Batteriesystem mit mehreren wiederaufladbaren Batterien (Akkumulatoren) ein Überladen einzelner Zellen zu vermeiden, schlägt die DE 10 2004 013 351 A1 eine Vorrichtung zur Ladeverteilung und Überwachung von mehreren Akkumulatoren vor, die in Serie geschaltet sind. Die einzelnen Akkumulatoren werden überwacht, indem die während des Ladens anliegende Spannung, der Spannungsgradient und die Temperatur erfasst werden. Beim Auftreten eines Fehlers wird der entsprechende Akkumulator durch eine regelbare Impedanz überbrückt, wobei eine Unterbrechung oder Reduzierung der Ladestromversorgung stattfindet und ein Bypass geschaltet wird.

Nicht nur beim Laden, insbesondere beim Überladen, sondern auch im Betrieb können gefährliche Zustände auftreten. Im Stand der Technik ist bekannt, unterschiedliche Betriebszustände von Batterien und Batteriesystemen zu überwachen und beim Auftreten eines Fehlerzustands eine fehlerhafte Batterie aus einem Betriebssystem zu entkoppeln. Einen Vorschlag für ein derartiges Batteriemanagementsystem macht beispielsweise die US 2008/0084182 A1.

Die US 2007/0212596 A1 befasst sich mit einer Sicherheitsabschaltung von Batteriesystemen mit einzelnen oder mehreren Batteriezellen, insbesondere mit Lithiumionenbatterien, wenn bestimmte überwachte Parameter von Sollwerten abweichen. Beispielsweise wird die Temperatur der Batterien überprüft. Alle Zellen können elektronisch abgeschaltet werden, wenn wenigstens eine der Zellen eine vorgegebene Temperatur überschreitet. Eine Kontrolleinrichtung kann alternativ oder zusätzlich den Ladezustand und den Ladezyklus der Zellen überwachen. Daneben können auch die Spannung und/oder die innere Impedanz der elektrochemischen Zellen überwacht werden.

Die US 2002/0074861 A1 schlägt eine Vorrichtung zum Trennen einer Batterie in einem Fahrzeug vor. Im Fehlerfall, wenn beim Auftreten eines Kurzschlusses, eines Feuers, eines Unfalls oder einer ähnlichen Situation die Sicherheit des Fahrzeugs oder der Insassen gefährdet ist, wird die Batterie in dem Fahrzeug abgeschaltet. Darüber hinaus ist vorgesehen, die Abschalt-Vorrichtung aktivieren und deaktivieren zu können, so dass verhindert wird, dass das Fahrzeug unbeweglich wird. Alternativ ist ein Kondensator vorgesehen, damit das Fahrzeug auch im Falle eines Kurzschlusses oder eines Spannungsabfalls an der Batterie nicht ohne Spannungsversorgung bleibt und eine Sicherheitsabschaltung durchgeführt werden kann. Bevorzugt erfolgt diese Sicherheitsabschaltung durch einen Transistor, der als Schalter arbeitet und die Batterie abtrennt.

Ein Hochstrombatteriesystem nach dem Stand der Technik ist in der WO 96/22625 veröffentlicht.

In vielen Einsatzgebieten der Batterien, beispielsweise im Elektrofahrzeug muss im Falle eines Fehlers die Batterie möglichst bald und zuverlässig abgeschaltet werden. Daher wird im Stand der Technik zum Trennen oder Überbrücken der fehlerhaften Batterie ein Hochstromschalter verwendet, der die hohen Betriebsströme der Batterie schalten kann. Nachteilig sind jedoch die hohen Kosten des Hochstromschalters. Zudem muss für jede Batterie bzw. jede Batteriezelle ein separater Schalter verwendet werden, was die Kosten insbesondere beim Einsatz einer Vielzahl von Batteriezellen in Elektrofahrzeugen entsprechend vervielfacht.

Neben der Verwendung von Hochstromschaltern ist auch bekannt, die Zuführleitung bzw. die Betriebsstromleitung einer einzelnen Batteriezelle zu zerstören, beispielsweise abzusprengen, um im Falle eines gravierenden Fehlers jedenfalls eine Abschaltung herbeizuführen.

Auf dieser Grundlage liegt der Erfindung das Problem zugrunde, ein verbessertes Hochstrombatteriesystem vorzuschlagen, bei dem einzelne Batteriemodule überwacht und im Falle des Erkennens eines Fehlerzustands abgeschaltet werden.

Gelöst wird das Problem durch ein Hochstrombatteriesystem mit den Merkmalen des Anspruchs 1 sowie durch ein Verfahren zur Steuerung eines Hochstrombatteriesystems mit den Merkmalen des Anspruchs 14. Die auf die unabhängigen Ansprüche rückbezogenen Unteransprüche stellen bevorzugte, nicht selbstverständliche Ausführungsformen des erfindungsgemäßen Hochstrombatteriesystems bzw. des erfindungsgemäßen Verfahrens dar.

In dem erfindungsgemäßen Hochstrombatteriesystem fließt ein hoher Betriebsstrom. Sein Maximalwert liegt in der Regel bei mindestens mehreren zehn Ampere, häufig im Bereich von 100 bis etwa 400 A. Der Betriebsstrom ist ein Ladestrom, bei dem das Hochstrombatteriesystem geladen wird oder ein Entladestrom, bei dem Energie aus dem Hochstrombatteriesystem entnommen wird. Im Rahmen der Erfindung wird unter dem Begriff "hoher Betriebsstrom" ein Lade- oder Entladestrom verstanden, der wenigstens 10 A beträgt, bevorzugt wenigstens 20 A. Derartige Hochstrombatteriesysteme eignen sich insbesondere für Fahrzeugantriebe, beispielsweise für Elektrokraftfahrzeuge. Im Folgenden wird ohne Beschränkung der Allgemeinheit auf ein Hochstrombatteriesystem für Fahrzeugantriebe Bezug genommen und die Erfindung anhand eines derartigen Antriebs bzw. eines Elektrofahrzeugs näher erläutert.

Das Hochstrombatteriesystem umfasst eine Batteriesystemüberwachungselektronik und eine Mehrzahl von Batteriemodulen. Jedes Batteriemodul schließt mindestens eine wiederaufladbare Batteriezelle ein. In einer Batteriezelle, die eine geschlossene Einheit ist, kann elektrische Energie gespeichert oder entnommen werden, d. h. die Batteriezelle kann geladen oder entladen werden. Hierzu sind aktive Materialien notwendig, die in der Zelle enthalten sind. Aktive Materialien im Sinne der Erfindung sind elektrochemisch wirksame Substanzen einer positiven oder negativen Elektrode, welche beim Laden und Entladen unter Oxidation oder Reduktion reagieren. Die Elektroden müssen innerhalb der Batteriezelle elektrisch voneinander getrennt sein. Der lonentransport zwischen den Elektroden muss jedoch durch einen geeigneten Elektrolyten gewährleistet sein.

Beispielsweise sind bei einer Lithium-Ionen-Batteriezelle die Aktivmaterialien Materialien, die eine reversible Aufnahme bzw. Abgabe der ladungstragenden Lithium-Ionen ermöglichen. Diese sind Hauptbestandteile der positiven bzw. der negativen Elektrode. Die positive Elektrode kann beispielsweise Lithiumkobaltoxid enthalten. Beim Laden werden Lithium-Ionen aus der Elektrode ausgelagert, wobei die Kobalt-Ionen oxidiert werden. Die negative Elektrode enthält z. B. Kohlenstoff, welcher beim Laden der Zelle reduziert wird und dabei Lithium-Ionen aufnimmt. Der Elektrolyt besteht aus einem organischen Lösemittel bzw. Lösemittelgemisch und einem Leitsalz.

Die erfindungsgemäße Batteriezelle beinhaltet den Elektrolyten und die aktiven Materialien, wobei der Elektrolyt eine auf SO₂ basierende Elektrolytlösung ist. Weder die aktiven Materialien noch der Elektrolyt werden während des Betriebes der Batteriezelle nachgefüllt, zugeführt oder entnommen. Mit anderen Worten werden während eines Lade- oder Entladevorgangs, bei dem Strom in die Batteriezelle hinein oder aus der Batteriezelle heraus fließt, weder Elektrolyt noch aktive Materialien entnommen, zugeführt oder die in der Batteriezelle vorhandene Menge der Materialien von außen beeinflusst. Die Zelle enthält alle notwendigen Komponenten, um Energie zu speichern, geladen und entladen zu werden.

In einer bevorzugten Ausführungsform hat die Batteriezelle ein Gehäuse, in dem die aktiven Materialien und der Elektrolyt enthalten ist. Das Gehäuse ist derart geschlossen, dass weder die aktiven Materialien noch der Elektrolyt während des Betriebs der Zelle entnommen oder zugeführt werden können.

In einer Batteriezelle befindet sich wenigstens ein Elektrodenpaar aus positiver und negativer Elektrode. In ihrer einfachsten Ausführung umfasst eine Batteriezelle also nur zwei Elektroden. Beispielsweise werden in zylindrischen Zellen eine negative und eine positive Elektrode zusammen rollenförmig gewickelt. Bevorzugt hat die Batteriezelle ein Gehäuse mit je einem Anschluss für die Elektroden. Es ist jedoch auch möglich, dass in einer Batteriezelle mehrere positive und negative Elektroden enthalten sind. Typisch für derartige Batteriezellen ist ein Aufbau aus mehreren übereinander oder nebeneinander angeordneten Schichten, deren Flächenabmessung sehr viel größer als ihre Dicke ist. Sie haben etwa gleich große Flächenabmessungen und sind in der Batteriezelle sandwichartig angeordnet. Gebräuchlich sind beispielsweise prismatische Batteriezellen mit einem quaderförmigen Gehäuse. Typischerweise sind sowohl die positiven Elektroden als auch die negativen Elektroden innerhalb der Batteriezelle parallel geschaltet.

Die Batteriezelle hat zwei Anschlüsse (Pole), wobei ein Anschluss den Kontakt zu einer oder mehreren positiven und der andere Anschluss den Kontakt zu einer oder mehreren negativen Elektrode herstellt, damit die Batteriezelle in einer elektrischen Schaltung verschaltet werden kann.

Die Mehrzahl der Batteriemodule des Hochstrombatteriesystems ist mit einer Betriebsstromleitung elektrisch in Reihe geschaltet, so dass im Betrieb des Hochstrombatteriesystems der Betriebsstrom (Entladestrom oder ein Ladestrom) durch die Betriebsstromleitung fließt. Die Betriebsstromleitung verbindet mindestens zwei benachbarte Batteriemodule. Im Sinne der Erfindung wird als Betriebsstromleitung jedoch auch die Leitung innerhalb des Hochstrombatteriesystems bezeichnet, die zu den Verbraucheranschlüssen des Batteriesystems führt.

Mindestens eines der Batteriemodule des Hochstrombatteriesystems ist als Bypass-Batteriemodul ausgebildet. Es umfasst einen Bypassschalter und eine Bypassleitung. Der Bypassschalter ist in einer Normalbetriebsstellung derart geschaltet, dass der Betriebsstrom durch das zugehörige (Bypass-) Batteriemodul fließt. Die Bypassleitung ist derart ausgebildet und angeordnet, dass nach Umschalten des Bypassschalters von der Normalbetriebsstellung in eine Bypassstellung das Bypass-Batteriemodul durch die Bypassleitung elektrisch überbrückt wird. Der Betriebsstrom fließt in der Bypassstellung des Schalters durch die Bypassleitung und nicht mehr durch das Bypass-Batteriemodul, so dass keine Batteriezelle extern kurzgeschlossen wird. Das Hochstrombatteriesystem umfasst für jedes Bypass-Batteriemodul eine Modulüberwachungseinheit, die das zugehörige Bypass-Batteriemodul überwacht und einen Fehlerzustand des Moduls detektiert.

Das erfindungsgemäße Verfahren umfasst folgende Schritte:

Mittels der Modulüberwachungseinheit des Hochstrombatteriesystems werden die Bypass-Batteriemodule des Systems überwacht. Beim Auftreten eines Fehlerzustands eines der Batteriemodule wird dieser Zustand detektiert. Die Batteriesystemüberwachungselektronik misst den Stromfluss in der Betriebsstromleitung. Im Fehlerfall eines Batteriemoduls wird dann überprüft, ob der Stromfluss in der Betriebsstromleitung kleiner als ein vorbestimmter Grenzwert ist, der in der Regel in Abhängigkeit von dem verwendeten Bypassschalter des Hochstrombatteriesystems definiert ist. Sobald der Stromfluss kleiner als der Grenzwert ist, wird der Bypassschalter von einer Normalbetriebsstellung in eine Bypassstellung geschaltet, so dass das (zugehörige) Bypass-Batteriemodul, bei dem ein Fehlerzustand detektiert wurde, elektrisch derart überbrückt wird, dass der Betriebsstrom durch die Bypassleitung fließt. In diesem Fall fließt der Betriebsstrom also nicht durch das fehlerhafte Batteriemodul, sondern an ihm vorbei. Die intakten Batteriemodule des Hochstrombatteriesystems werden nach wie vor von dem Betriebsstrom durchflossen.

Das erfindungsgemäße Hochstrombatteriesystem weist den Vorteil auf, dass durch die Erkennung eines Fehlerzustands ein externer Kurzschluss durch den Bypassschalter vermieden wird. Der Bypassschalter ist so konstruiert und ausgelegt, dass im Fehlerfall keine Überbrückung des fehlerhaften Batteriemoduls über die Batteriemodulanschlüsse erfolgt, sondern der Betriebsstrom über die separate Bypassleitung geführt wird. Das Batteriemodul ist folglich nicht mehr in den Stromkreis des Hochstrombatteriesystems geschaltet, sondern davon abgekoppelt. Im Falle, dass das Batteriemodul nur eine Batteriezelle umfasst, wird folglich diese Batteriezelle abgekoppelt. Somit wird sichergestellt, dass keine der Batteriezellen extern kurzgeschlossen wird, also ein Kurzschluss zwischen ihren Anschlusspolen hergestellt wird.

Das Überbrücken des fehlerhaften Batteriemoduls über die Batteriemodulanschlüsse würde zu einem externen Kurzschluss des Moduls führen. Bei einem externen Kurzschluss eines Batteriemoduls oder einer elektrochemischen Batteriezelle, ähnlich wie auch bei einem internen Kurzschluss, wird die gesamte in der Batteriezelle gespeicherte Energie entladen. Beispielsweise ist bekannt, dass bei herkömmlichen Lithium-Ionen-Zellen mit organischer Elektrolytlösung durch interne Kurzschlüsse Zustände aufgetreten sind, bei denen aufgrund der spontanen Energiefreisetzung die Zelle explodiert und in Brand geraten ist. Folglich ist ein Kurzschluss bei allen Arten von Batterien, die die elektrochemisch aktiven Materialien enthalten, generell zu vermeiden. Mittels des erfindungsgemäßen Batterieschalters und der geänderten Stromführung über die Bypassleitung wird dies zuverlässig gewährleistet.

Die Batteriesystemüberwachungselektronik schließt neben eventuellen weiteren Komponenten alle Modulüberwachungseinheiten der zu überwachenden Batteriemodule ein. Durch die Batteriesystemüberwachungselektronik werden alle Funktionen zur Verfügung gestellt, die zur Überwachung und Steuerung des Hochstrombatteriesystems erforderlich sind. Sie kann insbesondere einen Mikroprozessor oder andere Hardware einschließen. Ihre Funktionen können teilweise mittels Software realisiert sein. Bevorzugt können auch zusätzliche Funktionen von ihr ausgeführt werden, beispielsweise zur Kommunikation mit Modulen oder Bauelemente außerhalb des Hochstrombatteriesystems.

Beim Detektieren eines Fehlerzustands eines Bypassbatteriemoduls wird mittels der Batteriesystemüberwachungselektronik der Stromfluss in der Betriebsstromleitung gemessen. Diese Detektion erfolgt durch eine Komponente der Batteriesystemüberwachungselektronik. Bevorzugt wird sie mittels der Modulüberwachungseinheit des fehlerhaften Batteriemoduls durchgeführt. Die einzelnen Modulüberwachungseinheiten können dabei unabhängig voneinander und autark arbeiten. Sie können derart ausgebildet sein, dass sie den Stromfluss messen, den Vergleich mit dem vordefinierten Grenzwert durchführen und/oder den Bypassschalter derart steuern, dass er von der Normalbetriebsstellung in die Bypassstellung schaltet. In diesem Fall haben sie vorzugsweise jeweils einen eigenen Mikroprozessor. Alternativ können einige oder alle dieser Funktionen auch von einer gesonderten Komponente der Batteriesystemüberwachungselektronik ausgeführt werden.

Die Modulüberwachungseinheiten können ebenfalls in Hardware und optional teilweise in Software realisiert sein. Selbstverständlich können die elektronischen Komponenten je nach den Anforderungen in einer oder mehreren Baueinheiten zusammengefasst sein. Insbesondere kann jedem Batteriemodul eine Modulüberwachungseinheit als gesonderte Baueinheit zugeordnet sein. Die Modulüberwachungseinheiten können beispielsweise den gemessenen Stromfluss in der Betriebsstromleitung an eine Komponente (z.B. den Mikroprozessor) der Batteriesystemüberwachungselektronik übermitteln, so dass der Mikroprozessor der Batteriesystemüberwachungselektronik den Vergleich mit dem vordefinierten Grenzwert durchführt, der beispielsweise in einem Speicher der Batteriesystemüberwachungselektronik gespeichert ist.

Bevorzugt sind die Modulüberwachungseinheiten mit Ausnahme der notwendigen Sensoren in eine Zentraleinheit der Batteriesystemüberwachungselektronik integriert. Die räumliche Integration kann vorteilhaft sein, da ein besonders kompakter Aufbau möglich ist und mehrere Modulüberwachungseinheiten zusammengefasst werden können. Die Batteriemodule weisen in dieser Ausführungsform nur die notwendigen Sensoren zum Erfassen eines Fehlerzustands auf (z.B. Temperatursensor). Die Weiterverarbeitung der Messwerte erfolgt in der Zentraleinheit der Batteriesystemüberwachungselektronik.

Jede Modulüberwachungseinheit überwacht ein zugeordnetes Batteriemodul und detektiert einen auftretenden Fehlerzustand. Ein Fehlerzustand des Batteriemoduls kann ein Abweichen eines Betriebsparameters oder Betriebswertes von einem Normalwert oder Sollwert sein. Als Fehlerzustand wird auch ein technischer Fehler oder Defekt beispielsweise eine Überhitzung, eine Leckage oder das Auftreten eines Überdrucks an dem Batteriemodul eingestuft. Zur Überwachung des Batteriemoduls werden einzelne Parameter wie beispielsweise die Spannung, der Strom, der Ladezyklus oder die Temperatur gemessen bzw. beobachtet und mit Sollwerten verglichen. Ein Fehlerzustand wird detektiert, sobald ein überwachter Messwert von einem Sollwert abweicht und außerhalb eines Toleranzbereichs liegt, so dass für die Batteriezelle oder das Batteriemodul die Gefahr gegeben ist, dass es beschädigt wird, sich entzündet oder explodiert. Eine Fehlerdetektion und die notwendigen Sensoren sind dem Fachmann beispielsweise aus dem obengenannten Stand der Technik, insbesondere aus der DE 10 2004 013 351 A1 bekannt.

In einer besonders bevorzugten Ausführungsform sind die Batteriezellen des Hochstrombatteriesystems Alkalimetall-Batteriezellen. Ihr aktives Metall ist eines aus der chemischen Gruppe der Alkalimetalle, bevorzugt Lithium. Beispielsweise können die vielfach gebräuchlichen Lithium-Ionen-Batteriezellen vorteilhaft eingesetzt werden. Besonders bevorzugt sind jedoch AlkalimetallZellen oder Lithium-Zellen, deren Elektrolyt auf SO₂ basiert. Gegenüber den üblicherweise verwendeten Lithium-Ionen-Zellen mit organischen Elektrolyten zeichnet sich eine Lithium-Ionen-Zelle mit einem SO₂-Elektrolyt unter anderem durch eine erhöhte Funktionssicherheit aus. Erfindungsgemäß enthalten die Batteriezellen des Hochstrombatteriesystems eine Elektrolytlösung, die auf SO₂ basiert.

Das Hochstrombatteriesystem eines Elektrofahrzeugs wird sehr wechselhaft betrieben. Beim konstanten Fahren und Beschleunigen wird aus dem Batteriesystem Strom entnommen, so dass ein Entladestrom zu dem Antriebsmotor des Elektrofahrzeugs fließt. Beim Bremsen des Fahrzeugs wird Bremsenergie zum Laden des Batteriesystems genutzt, so dass ein Ladestrom zu dem Hochstrombatteriesystem fließt. Durch den Wechsel zwischen Fahrbetrieb und Bremsbetrieb entstehen immer wieder Betriebszustände, bei denen der in der Zuleitung zwischen Elektromotor und Batteriesystem fließende Strom gering ist. Häufig sinkt der Betriebsstrom auf Null ab, so dass das Hochstrombatteriesystem stromlos ist. Es kommen also in der Praxis bei elektrischen Fahrzeugantrieben häufig Betriebszustände vor, in denen der Betriebsstrom in der Betriebsstromleitung unterhalb des Grenzwertes liegt. Diese Zustände treten für eine Zeitdauer auf, die ausreichend groß ist, um den Bypassschalter umzuschalten und um ein defektes Batteriemodul zu überbrücken.

Diese Erkenntnis macht sich die Erfindung zunutze. Bei Detektion eines Fehlerzustands des Batteriemoduls durch eine der Modulüberwachungseinheiten misst bevorzugt die Batteriesystemüberwachungselektronik den Stromfluss in der Betriebsstromleitung und veranlasst den Bypassschalter des betreffenden Batteriemoduls von der Normalbetriebsstellung in die Bypassstellung zu einem Zeitpunkt umzuschalten, zu dem der Stromfluss in der Betriebsstromleitung kleiner als ein vorbestimmter Grenzwert ist.

Abhängig von den Erfordernissen des Einzelfalls, sollte die Abschaltung eines Batteriemoduls innerhalb einer relativ kurzen Zeit von bevorzugt kleiner einer Minute, besonders bevorzugt innerhalb weniger Sekunden (höchstens zehn Sekunden) erfolgen. Dazu wird der Bypass geschaltet, um das defekte Modul elektrisch abzukoppeln und den Stromfluss durch die anderen (intakten) Batteriemodule zu gewährleisten. Nicht in allen Fällen kann garantiert werden, dass spontan ein Betriebszustand mit einem Betriebsstrom unterhalb des Grenzwertes innerhalb der gewünschten Zeitdauer eintritt. Dieser Zustand kann auch gesteuert herbeigeführt werden. Hierzu kann das gesamte Hochstrombatteriesystem mit den Batteriemodulen kurzzeitig von der Last oder Ladung (beispielsweise von dem Elektromotor) abgetrennt werden. Das Abtrennen erfolgt so lange, bis der Bypassschalter des Systems umgeschaltet und das fehlerhafte Batteriemodul überbrückt ist.

In einer bevorzugten Ausführungsform des Hochstrombatteriesystems wird zur Herstellung dieses Niederstrom-Betriebszustands, bei dem in dem Batteriesystem der Betriebsstrom kleiner des Grenzwerts ist, eine Verbraucherstromsteuerung verwendet. Diese Steuerung steuert den Stromfluss zwischen dem Hochstrombatteriesystem und dem Verbraucher derart, dass der Strom in der Betriebsstromleitung unterhalb des Grenzwerts liegt. Im Rahmen der Erfindung wurde erkannt, dass hierzu vorteilhaft die bei einem Elektrofahrzeug vorhandene Elektromotorsteuerung verwendet werden kann, mit der ein von einem elektronischen Gaspedal als Geber erzeugte Sollwert eingeregelt wird. Die Elektromotorsteuerung regelt den Elektromotor des Fahrzeugs so, dass bei einem Fahrbetrieb und Beschleunigungsbetrieb Strom aus dem Hochstrombatteriesystem entnommen wird. Bei einem Bremsbetrieb wird Strom von dem Elektromotor erzeugt und dem Batteriesystem zugeführt. Im Freilaufbetrieb ist der Motor von dem Hochstrombatteriesystem entkoppelt. Als Bestandteil der Elektromotorsteuerung sind in einem Elektrofahrzeug die notwendigen Hochleistungselektronikelemente vorhanden.

Im Rahmen der Erfindung wurde erkannt, dass die in dem Fahrzeug vorhandene Hochleistungselektronik der Elektromotorsteuerung verwendet werden kann, um die für die Erfindung erforderliche Entkopplung des Hochstrombatteriesystems von der Last herbeizuführen. Das Abtrennen muss dabei nur für eine Zeitperiode stattfinden, in der ein Umschalten der Bypassschalter und ein Überbrücken der defekten Batteriemodule erfolgen kann. Das kurzzeitige Abtrennen dauert bevorzugt weniger als eine Sekunde, sehr bevorzugt weniger als 100 Millisekunden, besonders bevorzugt weniger als 20 Millisekunden. In der Regel wird es deshalb von dem Benutzer auch nicht oder kaum wahrgenommen, selbst wenn sich das Elektrofahrzeug im Fahrbetrieb befindet.

Alternativ kann in einem Elektrofahrzeug anstelle des vollständigen Abtrennens der Last von dem Hochstrombatteriesystem auch eine Reduktion des Verbraucherstroms durch die Elektromotorsteuerung derart stattfinden, dass der Betriebstrom in dem Hochstrombatteriesystem den erforderlichen Grenzwert unterschreitet. Ein derartiges Begrenzen könnte durch eine Phasenanschnittsteuerung beim Motor, durch eine Stromtaktung oder ein Zerhacken des Stroms oder ähnliche dem Fachmann bekannte Methoden erfolgen.

Im Fahrbetrieb eines Elektrofahrzeugs fließen beim Beschleunigen in der Regel bis zu 400 A. Würde man in dem Betriebszustand Fahrbetrieb oder Beschleunigen, also unter Last, einen Bypass schalten, so wäre die Gefahr eines Abrissbogens oder eines Schaltfunkens groß. Das ohnehin schon defekte Batteriemodul mit einer oder mehreren defekten Einzelzellen könnte sich auf Grund der Funkenbildung entzünden und einen größeren Schaden verursachen.

Mittels der erfindungsgemäßen Sicherheitsabschaltung erfolgt das Abschalten eines defekten Batteriemoduls nicht unter Last, sondern in einem Zustand, bei dem der Betriebsstrom in der Betriebsstromleitung gering ist. Bevorzugt ist der Betriebsstrom während des Schaltens des Bypassschalters kleiner 1 A, besonders bevorzugt nahezu Null Ampere. Insbesondere ist das Schalten des Bypassschalters einfacher, da nur kleinere, (weit) unterhalb des Betriebsstroms liegende Ströme geschaltet werden müssen. Jedenfalls soll der Betriebsstrom kleiner als ein vorbestimmter Grenzwert sein, der abhängig von dem eingesetzten Bypassschalter ist.

Das Schalten von kleinen Strömen (unterhalb 1 A) hat den Vorteil, dass kein Lichtbogen oder Schaltbogen auftritt, wie es beim Schalten von hohen Strömen im Bereich von mehreren zehn Ampere oder von mindestens 100 Ampere der Fall ist. Folglich muss auch keine Lichtbogenlöschung erfolgen. In einer bevorzugten Ausführungsform des Hochstrombatteriesystems wird der vorbestimmte Grenzwert des Stromflusses so gewählt, dass er höchstens 0,5 A, bevorzugt höchstens 0,2 A, besonders bevorzugt höchstens 0,1 A ist. Generell ist es auch möglich, den vorbestimmten Grenzwert auf 2 A, 5 A oder 10 A zu bestimmen. Der Bypassschalter ist dann entsprechend anzupassen.

Bei einem vorbestimmten Grenzwert von höchstens 1 A kann ein einfacher Schalter verwendet werden, der kein Hochlast- oder Hochstromschalter sein muss. Da diese einfachen Schalter im Vergleich zu einem Hochlast- oder Hochstromschalter preiswert sind, führt dies zu einer starken Kostenersparnis. Beispielsweise können Magnetschalter, ein einfaches Relais oder andere Einfachschalter verwendet werden. Der Schalter muss lediglich das Kriterium erfüllen, dass er im "Geschlossenzustand", wenn er in der Normalbetriebsstellung oder in der Bypassstellung geschaltet ist, den Betriebsstrom in dem Hochstrombatteriemodul zuverlässig leiten kann, ohne dass Störungen auftreten.

Eine bevorzugte Ausführungsform des erfindungsgemäßen Batteriesystems wird ohne Einschränkung der Allgemeinheit anhand der nachstehenden Figuren näher erläutert. Die darin ausgebildeten Besonderheiten können einzeln oder in Kombination auftreten. Es zeigen:
- Figur 1: eine Übersichtsskizze eines Elektrofahrzeugs mit einem Elektromotor, einem Hochstrombatteriesystem und einer Elektromotorsteuerung;
- Figur 2: ein erfindungsgemäßes Hochstrombatteriesystem mit einer Mehrzahl von Batteriemodulen und wenigstens einem Bypass-Batteriemodul;
- Figur 3: eine Detailskizze eines Bypass-Batteriemoduls mit einer Mehrzahl von Einzelzellen;
- Figur 4: das Hochstrombatteriesystem aus Fig. 2 mit angeschlossenem Verbraucher;
- Figur 5: eine alternative Ausführungsform eines Bypass-Batteriemoduls.

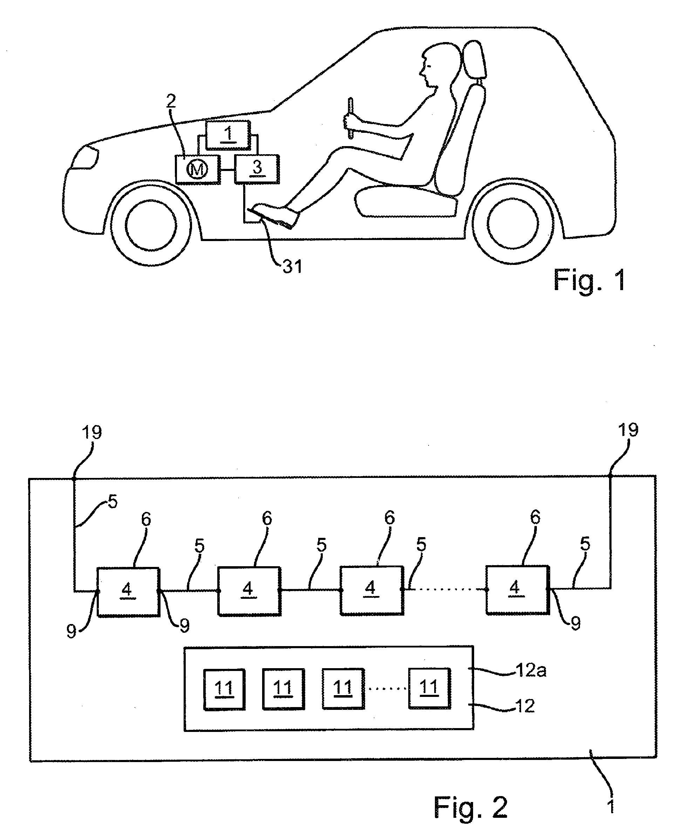

Figur 1 zeigt ein Elektrofahrzeug mit einem erfindungsgemäßen Hochstrombatteriesystem 1, einem Elektromotor 2 und einer Elektromotor-Steuerung 3, die den Elektromotor 2 steuert. Ein Geber 31 für die Elektromotor-Steuerung 3 ist als elektronisches Gaspedal ausgebildet. Der Geber 31 könnte aber auch eine Handsteuerung oder Ähnliches sein. Abhängig von der Stellung des elektronischen "Gaspedals" 31 wird im Betrieb des Elektrofahrzeugs mehr oder weniger Energie aus dem Hochstrombatteriesystem 1 entnommen und dem Elektromotor 2 zugeführt. Der Stromfluss ist entsprechend groß. Beim Erkennen eines Fehlerzustands des Bypass-Batteriemoduls 6 wird bevorzugt ein zwischen dem Hochstrombatteriesystem 1 und dem Elektromotor 2 fließender Verbraucherstrom durch die Elektromotor-Steuerung 3 derart gesteuert, dass ein in einer Betriebsstromleitung 5 des Hochstrombatteriesystems 1 zwischen mehreren Batteriemodulen 4 fließender Strom unterhalb eines vorbestimmten Grenzwerts liegt. Der Verbraucherstrom wird also gedrosselt, um im Folgenden das defekte Batteriemodul abschalten zu können. Auf Grund dieser Steuerung ist es nun möglich, einen während des Fahrbetriebs selbständig auftretenden Betriebszustand, bei dem in dem Hochstrombatteriesystem 1 ein geringer Strom, bevorzugt unter 1 A, fließt, gewollt herbeizuführen. Auf diese Weise kann beim Detektieren eines Fehlerfalls in einem Batteriemodul sofort das fehlerhafte Modul abgeschaltet werden. Es muss nicht abgewartet werden, bis der "Niedrigstromzustand" mit einem Betriebsstrom unterhalb des Grenzwerts von selbst erfolgt.

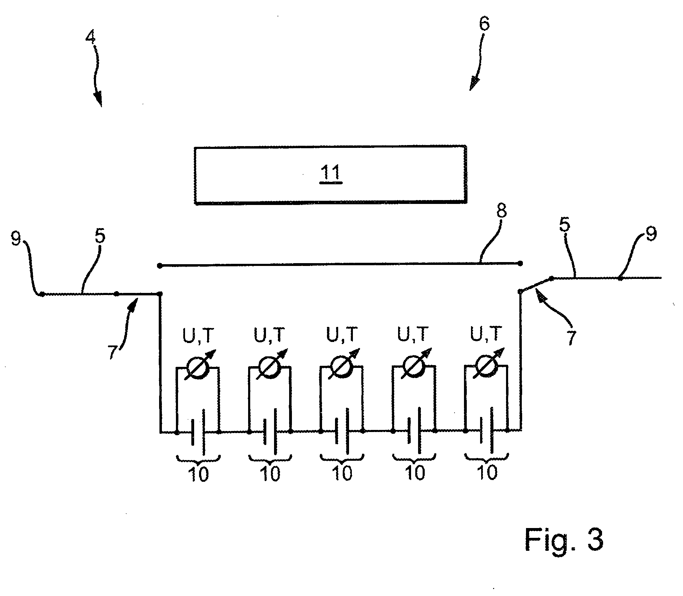

In den Figuren 2 und 3 ist das erfindungsgemäße Hochstrombatteriesystem 1 im Detail gezeigt. Es umfasst eine Mehrzahl von wiederaufladbaren Batteriemodulen 4, die in Reihe geschaltet sind. Eine Betriebsstromleitung 5 verbindet die in Reihe geschalteten Batteriemodule 4, so dass ein Betriebsstrom durch die Batteriemodule 4 fließen kann. Die Batteriemodule bilden einen Modulstrang. In einer alternativen Ausführungsform können mehrere (z. B. zwei) Modulstränge mit einer Mehrzahl von Batteriemodulen 4 parallel geschaltet sein.

Figur 2 zeigt, dass alle Batteriemodule 4 als Bypass-Batteriemodul 6 ausgebildet sind, die je einen Bypassschalter 7 und eine Bypassleitung 8 aufweisen. Die Bypass-Batteriemodule 6 können mittels des Bypassschalters 7 so umgeschaltet werden, dass in einer Bypassstellung des Schalters 7 der Betriebsstrom in der Betriebsstromleitung 5 durch die Bypassleitung 8 fließt und das Bypass-Batteriemodul 6 überbrückt ist, wenn ein Fehlerzustand in dem Bypass-Batteriemodul 6 auftritt und erkannt wird (Fig. 3).

In einer bevorzugten Ausführungsform weist das Hochstrombatteriesystem 1 mindestens drei, bevorzugt mindestens fünf Bypass-Batteriemodule 6 auf. Besonders bevorzugt ist eine Ausführungsform, mit mindestens zehn Bypass-Batteriemodulen 6. Für den praktischen Einsatz in einem Elektrofahrzeug hat sich eine Anzahl von 16 Bypass-Batteriemodulen in einem Hochstrombatteriesystem bewährt. Je höher die Anzahl der in Reihe geschalteten Bypass-Batteriemodule 6 ist, desto geringer sind die Auswirkungen eines fehlerhaften und überbrückten Batteriemoduls 6. Die Gesamtkapazität des Hochstrombatteriesystems 1 reduziert sich im Verhältnis der defekten Bypass-Batteriemodule 6. Das erfindungsgemäße Hochstrombatteriesystem 1 weist den Vorteil auf, dass neben einer einfachen Überwachung der einzelnen Batteriemodule 6 auch eine problemlose Fortsetzung des Fahrzeugbetriebs möglich ist, wenn nur eines oder wenige der Batteriemodule 6 ausfällt.

In einer bevorzugten Ausführungsform weisen die Batteriemodule 4 eine Mehrzahl von Batteriezellen 10 auf, die in Reihe geschaltet sind. Bevorzugt ist eine Ausführungsform mit sechs Batteriezellen 10 (Fig. 3). Die Spannung der einzelnen Batteriezellen 10 ist bevorzugt derart auszuwählen, dass das Batteriemodul insgesamt eine Spannung von kleiner 25 V aufweist. Beispielsweise kann jede der Zellen eine Spannung von 4 V aufweisen, wenn insgesamt sechs Batteriezellen 10 in einem Modul zusammengefasst sind. Selbstverständlich sind auch andere Spannungen und/oder eine andere Anzahl von Batteriezellen möglich. Wichtig ist, dass die Spannung insgesamt unter 25 V bleibt, damit das Batteriemodul nur eine Sicherheitskleinspannung (Safety Extra Low Voltage SELV) aufweist, damit Servicetechniker oder im Falle eines Unfalls z. B. Bergungsfachleute gefahrlos die Batteriemodule untersuchen können. Vorzugsweise können alle Bypassschaltungen von einem Servicetechniker ausgelöst werden, so dass das Hochstrombatteriesystem nur noch einzelne, voneinander getrennte Batteriemodule aufweist, deren Spannung kleiner 25 V ist. Im Falle eines Unfalls sollten die Bypassschaltung automatisch ausgelöst werden, um die Module voneinander zu trennen. Dies kann beispielsweise an die Airbagauslösung gekoppelt sein.

An zwei Anschlussklemmen 9 des Bypass-Batteriemoduls 6, die es mit der Betriebsstromleitung 5 verbinden, ist bevorzugt jeweils ein Bypassschalter 7 angeordnet, der als Umschalter ausgeführt ist. Parallel zu den Batteriezellen 10 des Bypass-Batteriemoduls 6 ist die Bypassleitung 8 geführt. Wird ein Fehler in dem Bypass-Batteriemodul 6 detektiert und ist der Betrag des in der Betriebsstromleitung 5 fließenden Stroms kleiner als der vorbestimmte Grenzwert, so werden die beiden Bypassschalter 7 von der hier gezeigten Normalbetriebsstellung in die Bypassstellung umgeschaltet, in der die beiden Schalter 7 die Bypassleitung 8 mit der Betriebsstromleitung 5 verbinden. Der Betrag des Grenzwertes ist abhängig von dem maximalen Schaltstrom des Bypassschalters 7, bei dem ein zuverlässiges Schalten des gewählten Schalters 7 möglich ist, ohne dass er beschädigt wird (beispielsweise durch Erhitzen) und ohne dass ein Schaltfunken oder ein Abrisslichtbogen entsteht.

Selbstverständlich ist es möglich, das Bypass-Batteriemodul 6 mit nur einem Bypassschalter 7 auszuführen. Der zweite Bypassschalter 7 wird dann durch ein Leitungsstück ersetzt, bei dem die Bypassleitung 8 an der Anschlussklemme 9 des Batteriemoduls 6 mit der Betriebsstromleitung 5 verbunden ist.

Die Modulüberwachungseinheiten 11 des Hochstrombatteriesystems 1 bilden eine Batteriesystemüberwachungselektronik 12. In der Ausführungsform des Hochstrombatteriesystems 1 gemäß Fig. 2 sind die Modulüberwachungseinheiten 11 der Bypass-Batteriemodule 6 (bis auf die notwendigen Sensoren) in einer Zentraleinheit 12a der Batteriesystemüberwachungselektronik 12 integriert. Bei Detektion eines Fehlerzustands eines Batteriemoduls 4 misst die Batteriesystemüberwachungselektronik 12 den Stromfluss in der Betriebsstromleitung 5. Die Strommessung kann an einer beliebigen Stelle der Batteriestromleitung 5 erfolgen, also z. B. zwischen zwei benachbarten Batteriemodulen 4 oder zwischen einer Anschlussklemme 19 des Hochstrombatteriesystems 1 und einem Batteriemodul 4.

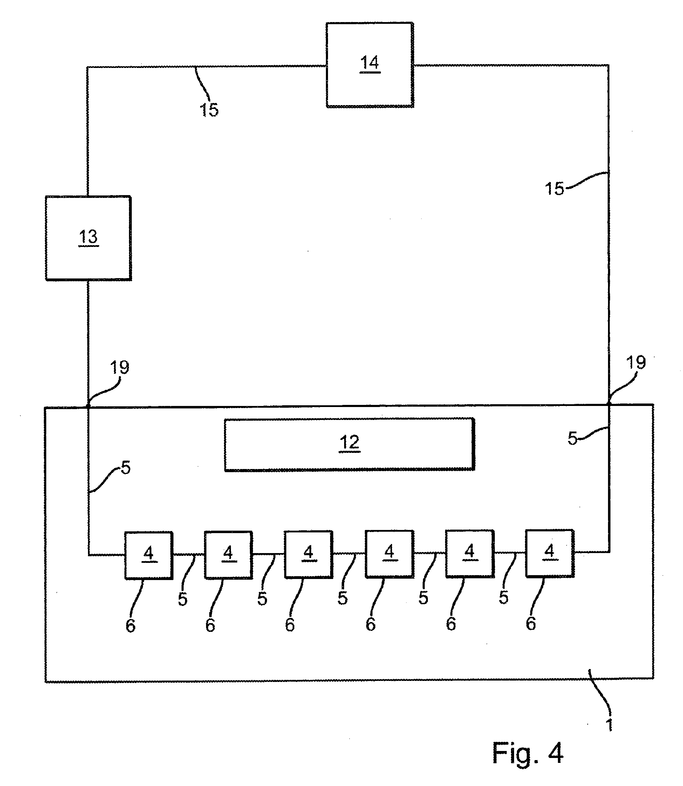

In einer bevorzugten Ausführungsform gemäß Fig. 4 weist das Hochstrombatteriesystem 1 eine Verbraucherstromsteuerung 13 auf, die den Stromfluss durch einen mittels einer Verbraucherstromleitung 15 an das Hochstrombatteriesystem 1 angeschlossenen Verbraucher 14 steuert. Bei Detektion eines Fehlerzustands in einem der Bypass-Batteriemodule 6 wird der Stromfluss in der Verbraucherstromleitung 15 derart gesteuert, dass der Stromfluss in der Betriebsstromleitung 5 kleiner als der vorbestimmte Grenzwert ist, so dass der Bypassschalter 7 des defekten Moduls 6 geschaltet werden kann. Bei einem Einsatz des Hochstrombatteriesystems 1 in einem Elektrofahrzeug ist die Verbraucherstromsteuerung 13 die Elektromotorsteuerung 3. Der Verbraucher 14 ist der Elektromotor 2, so dass die Elektromotorsteuerung 3 den Stromfluss in und aus dem Elektromotor 2 entsprechend regelt. Die Kommunikation zwischen der Batteriesystemüberwachungselektronik 12, den Modulüberwachungseinheiten 11, den Bypassschaltern 7, der Verbraucherstromsteuerung 13 und/oder der Elektromotorsteuerung 3 findet beispielsweise über ein Bussystem (z. B. CAN-Bus) oder andere Signalleitungen statt.

Wie in Figur 3 dargestellt, wird jede der Batteriezellen 10 von einer Modulüberwachungseinheit 11 überwacht, die optional an dem jeweiligen Modul angeordnet sein kann. Zur Überwachung des Bypass-Batteriemoduls 6 werden in den Batteriezellen 10 z. B. die Spannung und die Temperatur gemessen, um den Zustand des Bypass-Batteriemoduls 6 bzw. der Batteriezelle 10 zu überprüfen. Alternativ können nur einige der Batteriezellen 10 oder nur das gesamte Bypass-Batteriemodul 6 überwacht werden. Im Fall der Überwachung des Bypass-Batteriemoduls 6 werden zum Beispiel die Temperatur, die Spannung oder der Strom des Batteriemoduls 6 erfasst. Derartige und ähnliche Überwachungsschaltungen sind beispielsweise in DE 10 2004 013 351 A1 beschrieben. Die Modulüberwachungseinheit 11 kann z.B. auch den Strom in der Betriebstromleitung 8 messen und/oder den Bypassschalter 7 steuern.

Im Rahmen der Erfindung können unterschiedliche Batteriezellen 10 als Bestandteile der Batteriemodule 4 verwendet werden. Bevorzugt kommen Alkalimetallzellen zum Einsatz, insbesondere Zellen, deren aktives Metall Lithium ist. Die vielfach gebräuchlichen Lithium-lonen-Batteriezellen können vorteilhaft eingesetzt werden. Besonders bevorzugt sind jedoch Lithiumzellen oder andere Alkalimetallzellen, deren Elektrolyt auf SO₂ basiert. Sie zeichnen sich gegenüber den üblichen, mit organischen Elektrolyten arbeitenden Lithium-Ionen-Zellen unter anderem durch eine erhöhte Funktionssicherheit aus. Nähere Einzelheiten sind in der einschlägigen Literatur beschrieben, wobei beispielsweise auf die WO 2005/031908, die WO 2009/077140, die WO 2000/ 79631 und die darin zitierten Dokumente verwiesen werden kann.

Erfindungsgemäß ist das Hochstrombatteriesystem 1 derart ausgebildet, dass die Batteriezellen 10 der einzelnen Batteriemodule 4 eine Elektrolytlösung enthalten, die auf SO₂ basieren. Derartige Zellen zeichnen sich durch die Unbrennbarkeit der Elektrolytlösung und anderer Bestandteile des Batteriesystems aus. Selbst bei sicherheitskritischen Zuständen entzündet sich die Zelle nicht. Vorteilhaft bei SO₂-Batteriezellen erweist sich auch, dass selbst bei einer Tiefentladung oder bei Umkehr der Polarität einer Einzelzelle keine sicherheitskritischen Zustände auftreten.

Beim Überladen gebildete Reaktionsprodukte werden reversibel zu Bestandteilen der Elektrolytlösung zurückgebildet, so dass eine Batteriezelle 10 bis zu einem gewissen Grad überladen werden kann, ohne dass eine sofortige Abschaltung des Moduls erfolgen muss. Darüber hinaus kann ein Modul mit einer fehlerhaften Zelle 10 auch nach einer gewissen Ruhezeit, in der es aus dem Hochstrombatteriesystem 1 abgeschaltet war, in den Stromkreis wieder eingeschaltet werden, da eine Art Selbstheilung entsteht. Bevorzugt erkennt die Batteriesystemüberwachungselektronik 12 und/oder die Modulüberwachungseinheit 11, dass die Zelle wieder funktionsfähig ist und schaltet den Bypassschalter 7 wieder in Normalbetriebsstellung und somit das Bypass-Batteriemodul 6 wieder in den Stromkreis des Hochstrombatteriesystems 1. Dieses Umschalten erfolgt ebenfalls erst, wenn der Betriebsstrom in der Betriebsstromleitung 5 unterhalb des Grenzwerts liegt.

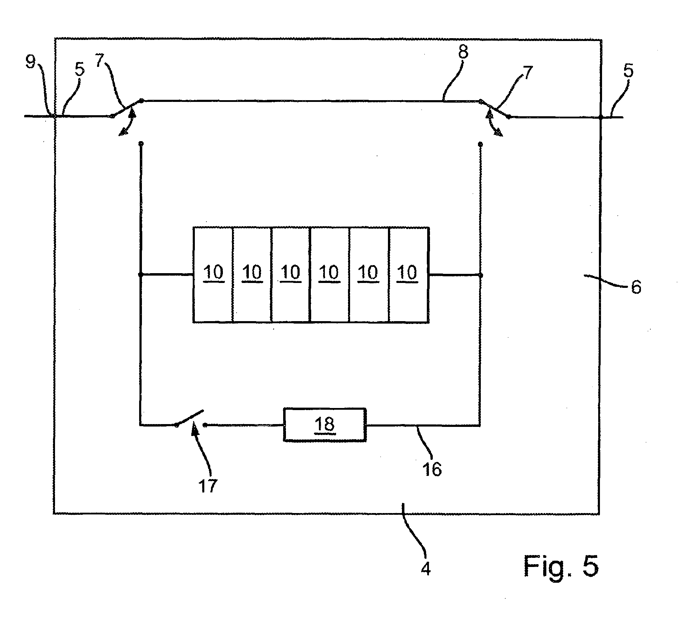

Im Rahmen der Erfindung wurde erkannt, dass derartige Batteriesysteme mit SO₂-Batteriezellen auch "energielos" geschaltet werden können. In einer bevorzugten Ausführungsform gemäß Fig. 5 weist das Bypass-Batteriemodul 6 eine parallel zu dem Modul 6 geschaltete Entladeleitung 16 auf, die einen Entladeschalter 17 und einen Entladewiderstand 18 umfasst. Diese Entladeschaltung kann in das Bypass-Batteriemodul 6 integriert sein. Sobald der Entladeschalter 17 geschlossen ist, wird das Batteriemodul 4 über den Entladewiderstand 18 entladen, bis die Spannung in dem Batteriemodul 4 auf 0 V reduziert ist. Die Kapazität des Batteriemoduls 6 wird über den Entladewiderstand 18 entladen, wobei die vorhandene Energie in Wärme umgewandelt wird. Der Entladewiderstand 18 ist derart auszuwählen, dass die dabei auftretende Wärme abgeleitet werden kann (ohne dass der Widerstand zerstört wird).

Durch diesen energielosen Zustand des Batteriemoduls 6 ist ein gefahrloser Umgang mit dem Modul 6 möglich. Beim Einsatz in Elektrofahrzeugen können vor einem Austausch der Batterie oder vor Arbeiten an dem Elektrofahrzeug die einzelnen Module spannungsfrei geschaltet werden. Unbeabsichtigte Kurzschlüsse, beispielsweise beim Einbauen oder Ausbauen können nicht mehr entstehen. Das Hochstrombatteriesystem 1 hat den Vorteil, dass es im Falle eines Unfalls durch die Entladeschaltung insgesamt stromlos geschaltet werden kann. Auch beim Transport können keine sicherheitskritischen Zustände auftreten, da keine Spannung an den Batteriemodulen 4 anliegt. Die Sicherheit dieser Module 4 ist sehr hoch, was insbesondere für den Lufttransport vorteilhaft ist.

In einer bevorzugten Ausführungsform wird der Entladeschalter 17 nur dann geschlossen, wenn der Bypassschalter 7 in der Bypassstellung geschaltet ist und das Batteriemodul 6 von dem Stromkreis des Hochstrombatteriesystems 1 entkoppelt ist. Folglich wird vor dem Schalten des Entladeschalters 17 überprüft, ob der Bypassschalter 7 in der Bypassstellung geschaltet ist, wie in Fig. 5 gezeigt. Erst dann findet ein Schalten des Entladeschalters 17 in eine Geschlossenstellung statt.

## Patentansprüche

1. Hochstrombatteriesystem, in dem ein hoher Betriebsstrom fließt, insbesondere für Fahrzeugantriebe, mit
- einer Batteriesystemüberwachungselektronik (12) und
- einer Mehrzahl von Batteriemodulen (4), die jeweils mindestens eine wiederaufladbare Balteriezelle (10) einschließen und die derartig mittels einer Betriebsstromleitung (5) elektrisch in Reihe geschaltet sind, dass im Betrieb ein Betriebsstrom durch die Betriebsstromleitung (5) fließt,
wobei
- in der Batteriezelle (10) ein Elektrolyt und aktive Materialen enthalten sind, um elektrische Energie zu speichern,
- die Batteriezelle (10) eine Elektrolytlösung enthält, die auf SO₂ basiert.
- mindestens eines der Batteriemodule (4) als Bypass-Batteriemodul (6) ausgebildet ist, das einen Bypassschalter (7) und eine Bypassleitung (8) aufweist, die so ausgebildet und angeordnet sind, dass nach Umschalten des Bypassschalters (7) von einer Normalbetriebsstellung in eine Bypassstellung das Batteriemodule (4) durch die Bypassleitung (8) elektrisch überbrückt ist, so dass der Betriebsstrom durch die Bypassleitung (8) fließt, wobei ein externer Kurzschluss der Batteriezelle (10) des Batteriemoduls (4) vermieden wird,
- die Batteriesystemüberwachungselektronik (12) für jedes Bypass-Batteriemodul (6) eine Modulüberwachungseinheit (11) einschließt, die das Batteriemodul (4) überwacht und einen Fehlerzustand des Batteriemoduls (4) detektiert, und
- die Batteriesystemüberwachungselektronik (12) bei Detektion eines Fehterzustands eines Batteriemoduls (4) durch eine der Modulüberwachungseinheiten (11) den Stromfluss in der Betriebsstromleitung (5) misst und den Bypassschalter (7) des betreffenden Batteriemoduls (4) von der Normalbetriebsstellung in die Bypassstellung zu einem Zeitpunkt umschaltet. zu dem der Stromfluss in der Betriebsstromleitung (5) kleiner als ein vorbestimmter Grenzwert ist.

2. Hochstrombatteriesystem nach Anspruch 1, **dadurch gekennzeichnet, dass** der Batteriezelle (10) weder die aktiven Materialien noch der Elektrolyt während des Betriebs der Batteriezelle (10) nachgefüllt, zugeführt oder entnommen werden.

3. Hochstrombatteriesystem nach Anspruch 1 oder 2, **dadurch gekennzeichnet, dass** die Batteriezelle (10) ein geschlossenes Gehäuse aufweist, in dem der Elektrolyt und die aktiven Materialien enthalten sind.

4. Hochstrombatteriesystem nach einem der vorhergehenden Ansprüche, **dadurch gekennzeichnet, dass** die Modulüberwachungseinheit (11) in der Batterieüberwachungselektronik (12) integriert ist.

5. Hochstrombatteriesystem nach einem der vorhergehenden Ansprüche, **dadurch gekennzeichnet, dass** das Batteriemodul (4) eine Mehrzahl von Batteriezellen (10), bevorzugt sechs Batteriezellen (10), einschließt, die in Reihe geschallet sind.

6. Hochstrombatteriesystem nach einem der vorhergehenden Ansprüche, **dadurch gekennzeichnet, dass** es mindestens drei, bevorzugt mindestens fünf Bypass-Batteriemodule (6), besonders bevorzugt mindestens zehn Bypass-Batteriemodule (6) einschließt.

7. Hochstrombatteriesystem nach einem der vorhergehenden Ansprüche, **dadurch gekennzeichnet, dass** der vorbestimmte Grenzwert des Stromflusses höchstens 1 A, bevorzugt höchstens 0,5 A, besonders bevorzugt höchstens 0,1 A ist.

8. Hochstrombatteriesystem nach einem der vorhergehenden Ansprüche, **dadurch gekennzeichnet, dass** der Bypassschalter (7) ein magnetischer Schalter ist.

9. Hochstrombattenesystem nach einem der vorhergehenden Ansprüche, **dadurch gekennzeichnet, dass** das Batteriemodul (4) eine parallel zu dem Batteriemodul (4) geschaltete Entladeleitung (16) mit einem Entladewiderstand (18) und einem Entladeschalter (17) umfasst.

10. Hochstrombatteriesystem nach Anspruch 9, **dadurch gekennzeichnet, dass** die Entladeleitung (16) durch den Entladeschalter (17) nur dann geschlossen wird, wenn der Bypassschalter (7) in der Bypasssiellung ist und das Batteriemodul (4) durch die Bypassleitung (8) elektrisch überbrückt ist, so dass der Betriebsstrom durch die Bypassleitung (8) fließt.

11. Hochstrombatteriesystem nach einem der vorhergehenden Ansprüche, **gekennzeichnet durch** eine Verbraucherstromsteuerung (13) zur Steuerung des Stromflusses **durch** einen an das Hochstrombatteriesystem (1) angeschlossenen Verbraucher (14) derart, dass der Stromfluss **durch** die Betriebsstromleitung (5) des Hochstrombatteriesystems (1) kleiner als der vorbestimmte Grenzwert ist.

12. Elektrofahrzeug mit einem Elektromotor (2), einer Elektromotor-Steuerung (3) zur Steuerung des Elektromotors (2) und mit einem Hochstrombatteriesystem (1), **dadurch gekennzeichnet, dass** das Hochstrombatteriesystem (1) nach einem der vorhergehenden Ansprüche ausgebildet ist.

13. Elektrofahrzeug nach Anspruch 12 **dadurch gekennzeichnet, dass** durch die Elektromotor-Steuerung (3) ein zwischen dem Hochstrombatteriesystem (1) und dem Elektromotor (2) fließende Verbraucherstrom so steuerbar ist, dass der in der Betriebsstromleitung (5) des Hochstrombatteriesystems (1) fließende Strom unterhalb des vorbestimmten Grenzwerts liegt.

14. Verfahren zur Steuerung eines Hochstrombatteriesytems, insbesondere eines Hochstrombatteriesystems nach einem der Ansprüche 1 bis 10, mit
einer Batterlenberwachungselektronik (12) und
einer Mehrzahl von Batteriemodulen (4), die jeweils mindestens eine wiederaufladbare Batteriezelle (10) einschließen und die derartig mittels einer Betriebsstromleitung (5) elektrisch in Reihe geschaltet sind, dass im Betrieb ein Betriebsstrom durch die Betriebsstromleitung (6) fließt,
wobei
in der Batteriezelle (10) ein Elektrolyt und aktive Materialen enthalten sind, um elektrische Energie zu speichern, und die Batteriezelle (10) eine Elektrolytlösung enthält, die auf SO2 basiert,
mindestens eines der Batteriemodule (4) als Bypass-Batteriemodul (6) ausgebildet ist, das einen Bypassschalter (7) und eine mit dem Batteriemodul (4) parallel geschaltete Bypassleitung (8) aufweist, und
das Hochstrombatteriesystem (1) für jedes Bypass-Batteriemodul (6) eine Modulüberwachungseinheit (11) umfasst,
**gekennzeichnet durch** die folgenden Schritte:
a) Überwachen des Batteriemoduls (4) mittels der Modulüberwachungseinheit (11);
b) Detektieren eines Fehlerzustands des Batteriemoduls (4);
c) Messen des Stromflusses in der Betriebsstromteitung (5) **durch** die Batteriesystemoberwachungselektronik (12), wenn ein Fehlerzustand eines Batteriemoduls (4) **durch** eine der Modulüberwachungseinheiten (11) detektiert wird;
d) Überprüfen, ob der gemessene Stromfluss in der Betriebsstromleitung (5) kleiner ist als ein vorbestimmter Grenzwert;
e) wenn der gemessene Stromfluss kleiner als der Grenzwert ist, Schalten des Bypassschalters (7) von einer Normalbetriebsstellung in eine Bypassstellung derart, dass das Batteriemodul (4), bei dem ein Fehlerzustand detektiert wurde, **durch** die Bypassleitung (8) elektrisch überbrückt wird und der Betriebsstrom **durch** die Bypassleitung (8) fließt, wobei ein externer Kurzschluss der Batteriezelle (10) vermieden wird.

15. Verfahren zur Steuerung eines Hochstrombatteriesystems nach Anspruch 14, wobei das Hochstrombatteriesystem (1) eine Verbraucherstromsteuerung (13) zur Steuerung des Stromflusses durch einen an das Hochstrombatteriesystem (1) angeschlossenen Verbraucher (14) umfasst,
**gekennzeichnet durch** den weiteren Schritt:
Begrenzen des Stromflusses in dem Hochspannungsbatteriesystem (1) durch die Verbraucherstromsteuerung (13) derart, dass der Stromfluss in der Betriebsstromleitung (5) des Hochstrombatteriesystems (1) kleiner als der vorbestimmte Grenzwert ist.

16. Verfahren nach Anspruch 14 oder 15, wobei das Batteriemodul (4) einen Entladeschalter (17) und einen in einer elektrisch zu dem Batterlemodul (4) parallelen Entladeleitung (16) angeordneten Entladewiderstand (18) umfasst und der Entladeschalter (17) in der Entladeleitung (16) angeordnet ist,
**gekennzeichnet durch** den weiteren Schritt:
Überprüfen, ob der Bypass-Schalter (7) derart in die Bypassstellung geschaltet ist, dass das Batteriemodul (4) **durch** die Bypasaleitung (8) elektrisch überbrückt ist und der Betriebsstrom **durch** die Bypassleitung (8) fließt;
Schalten des Entladeschalters (17) in eine Geschlossenstellung derart, dass der Stromkreis **durch** die Entladeleitung (16) geschlossen ist;
Entladen des Batteriemoduls (4) über den Entladewiderstand (17) mittels eines Stromflusses aus dem Batteriemodul (4) In den Entladewiderstand (18).

## Claims

1. High power battery system in which a large operating current flows, particularly for vehicle drivetrains, comprising
- a battery system monitoring electronics (12) and
- a plurality of battery modules (4), each of which comprises at least one rechargeable battery cell (10), and which are electrically connected in series via an operating current line (5) in such manner that, during operation, an operating current flows through the operating current line (5),
wherein
- an electrolyte and active materials are contained in the battery cell (10) to store electrical energy,
- the battery cell (10) contains an electrolyte solution, which is based on SO₂,
- at least one of the battery modules (4) is constructed as a bypass battery module (6), which comprises a bypass switch (7) and a bypass line (8), which are designed and arranged such that when the bypass switch (7) has been switched from a normal operating position to a bypass position, the battery module (4) is electrically bypassed by the bypass line (8) so that the operating current flows through the bypass line (8), thereby avoiding an external short circuit of the battery cell (10) of the battery module (4),
- the battery system monitoring electronics (12) comprises a module monitoring unit (11) for each bypass battery module (6), which unit monitors the battery module (4) and detects a fault state of the battery module (4), and
- when a fault state of a battery module (4) is detected by one of the module monitoring units (11), the battery system monitoring electronics (12) measures the current flow in the operating current line (5) and switches the bypass switch (7) of the respective battery module (4) from the normal operating position to the bypass position at a time when the current flow in the operating current line (5) is lower than a predetermined limit value.

2. High power battery system according to claim 1, **characterized in that** neither the active materials nor the electrolyte are replenished, added to or removed from the battery cell (10) during operation of the battery cell (10).

3. High power battery system according to claim 1 or 2, **characterized in that** the battery cell (10) comprises a closed housing in which the electrolyte and the active materials are contained.

4. High power battery system according to any one of the preceding claims, **characterized in that** the module monitoring unit (11) is integrated in the electronic battery monitoring means (12).

5. High power battery system according to any one of the preceding claims, **characterized in that** the battery module (4) comprises a plurality of battery cells (10), preferably six battery cells (10), which are connected in series.

6. High power battery system according to any one of the preceding claims, **characterized in that** it comprises at least three, preferably at least five bypass battery modules (6), and particularly preferably at least ten bypass battery modules (6).

7. High power battery system according to any one of the preceding claims, **characterized in that** the predetermined limit value of the current flow is not greater than 1 A, preferably not greater than 0.5 A, particularly preferably not greater than 0.1 A.

8. High power battery system according to any one of the preceding claims, **characterized in that** the bypass switch (7) is a magnetic switch.

9. High power battery system according to any one of the preceding claims, **characterized in that** the battery module (4) comprises a discharge line (16) switched parallel to the battery module (4) and having a discharge resistor (18) and a discharge switch (17).

10. High power battery system according to claim 9, **characterized in that** the discharge line (16) is not closed by the discharge switch (17) until the bypass switch (7) is in the bypass position and the battery module (4) has been electrically bypassed by the bypass line (8) so that the operating current flows through the bypass line (8).

11. High power battery system according to any one of the preceding claims, **characterized by** a load current drive (13) for controlling the current flow via a consumer load (14) connected to the high power battery system (1) in such manner that the current flow through the operating current line (5) of the high power battery system (1) is smaller than the predetermined limit value.

12. Electric vehicle with an electric motor (2), an electric motor control unit (3) for controlling the electric motor (2), and with a high power battery system (1), **characterized in that** the high power battery system (1) is designed in accordance with any one of the preceding claims.

13. Electric vehicle according to claim 12, **characterized in that** a load current flowing between the high power battery system (1) and the electric motor (2) is controllable with the electric motor control unit (3) such that the current flowing in the operating current line (5) of the high power battery system (1) is less than the predetermined limit value.

14. Method for controlling a high power battery system, particularly a high power battery system according to any one of claims 1 to 10, having
an electronic battery monitoring means (12) and
a plurality of battery modules (4), each of which comprises at least one rechargeable battery cell (10), and which are electrically connected in series via an operating current line (5) such that during operation an operating current flows through the operating current circuit (8),
wherein
an electrolyte and active materials are contained in the battery cell (10) to store electrical energy, and the battery cell (10) contains an electrolyte solution, which is based on SO₂,
at least one of the battery modules (4) is constructed as a bypass battery module (6), which comprises a bypass switch (7) and a bypass line (8) that is switched in parallel with the battery module (4), and
the high power battery system (1) comprises one module monitoring unit (11) for each bypass battery module (6),
**characterized by** the following steps:
a) monitoring the battery module (4) via the module monitoring unit (11);
b) detecting a fault state of the battery module (4);
c) measuring the current flow in the operating current line (5) by means of the battery system monitoring electronics (12) when a fault state of a battery module (4) is detected by one of the module monitoring units (11);
d) checking whether the measured current flow in the operating current line (5) is smaller than a predetermined limit value;
e) if the measured current flow is smaller than the predetermined limit value, switching the bypass switch (7) from a normal operation position to a bypass position such that the battery module (4) for which a fault state was detected is electrically bypassed by the bypass line (8) and the operating current flows through the bypass line (8), thereby avoiding an external short circuit of the battery cell (10).

15. Method for controlling a high power battery system according to claim 14, wherein the high power battery system (1) comprises a load current drive (13) for controlling the current flow through a consumer load (14) connected to the high power battery system (1),
**characterized by** the further step:
limiting the current flow in the high power battery system (1) via the load current drive (13) such that the current flow in the operating current line (5) of the high power battery system (1) is smaller than the predetermined limit value.

16. Method according to claim 14 or 15, wherein the battery module (4) comprises a discharge switch (17) and a discharge resistor (18) that is arranged in a discharge line (16) that is electrically parallel to the battery module (4), and the discharge switch (17) is arranged in the discharge line (16),
**characterized by** the further step:
checking whether the bypass switch (7) is switched to the bypass position such that the battery module (4) is bypassed by the bypass line (8), and the operating current flows through the bypass line (8);
switching the discharge switch (17) to a closed position such that the load circuit is closed by the discharge line (16);
discharging the battery module (4) through the discharge resistor (17) via a current flow from the battery module (4) into the discharge resistor (18).

## Revendications

1. Système de batterie à courant élevé dans lequel circule un courant de service élevé, notamment pour entraînements de véhicules, comprenant
- une électronique de surveillance du système de batterie (12) et
- une pluralité de modules de batterie (4) qui comprennent chacun au moins un élément de batterie rechargeable (10) et qui sont connectés électriquement en série au moyen d'une ligne de courant de service (5) de telle sorte qu'un courant de service circule dans la ligne de courant de service (5) pendant le fonctionnement,
sachant que
- un électrolyte et des matériaux actifs sont contenus dans l'élément de batterie (10) pour emmagasiner l'énergie électrique,
- l'élément de batterie (10) contient une solution d'électrolyte à base de SO₂,
- au moins un des modules de batterie (4) est conçu comme module de batterie de dérivation (6) présentant un commutateur de dérivation (7) et une ligne de dérivation (8), lesquels sont conçus et disposés de telle sorte que, lorsque le commutateur de dérivation (7) a été commuté d'une position de fonctionnement normal en une position de dérivation, le module de batterie (4) est ponté électriquement par la ligne de dérivation (8) de sorte que le courant de service circule dans la ligne de dérivation (8), en évitant un court-circuit externe de l'élément de batterie (10) du module de batterie (4),
- l'électronique de surveillance du système de batterie (12) comprend pour chaque module de batterie de dérivation (6) une unité de surveillance de module (11) qui surveille le module de batterie (4) et détecte une anomalie du module de batterie (4), et
- l'électronique de surveillance du système de batterie (12), en cas de détection d'une anomalie d'un module de batterie (4) par une des unités de surveillance de module (11), mesure le flux de courant dans la ligne de courant de service (5) et commute le commutateur de dérivation (7) du module de batterie (4) concerné de la position de fonctionnement normal en position de dérivation à un moment où le flux de courant dans la ligne de courant de service (5) est inférieur à une valeur limite prédéterminée.

2. Système de batterie à courant élevé selon la revendication 1, **caractérisé en ce que** ni les matériaux actifs ni l'électrolyte ne sont ajoutés, amenés ou retirés de l'élément de batterie (10) pendant le fonctionnement de l'élément de batterie (10).

3. Système de batterie à courant élevé selon la revendication 1 ou 2, **caractérisé en ce que** l'élément de batterie (10) présente un boîtier fermé dans lequel sont contenus l'électrolyte et les matériaux actifs.

4. Système de batterie à courant élevé selon l'une des revendications précédentes, **caractérisé en ce que** l'unité de surveillance de module (11) est intégrée dans l'électronique de surveillance de batterie (12).

5. Système de batterie à courant élevé selon l'une des revendications précédentes, **caractérisé en ce que** le module de batterie (4) comprend une pluralité d'éléments de batterie (10), de préférence six éléments de batterie (10), qui sont connectés en série.

6. Système de batterie à courant élevé selon l'une des revendications précédentes, **caractérisé en ce qu'**il comprend au moins trois, de préférence au moins cinq modules de batterie de dérivation (6), mieux encore au moins dix modules de batterie de dérivation (6).

7. Système de batterie à courant élevé selon l'une des revendications précédentes, **caractérisé en ce que** la valeur limite prédéterminée du flux de courant n'est pas plus de 1 A, de préférence pas plus de 0,5 A, mieux encore pas plus de 0,1 A.

8. Système de batterie à courant élevé selon l'une des revendications précédentes, **caractérisé en ce que** le commutateur de dérivation (7) est un commutateur magnétique.

9. Système de batterie à courant élevé selon l'une des revendications précédentes, **caractérisé en ce que** le module de batterie (4) comprend une ligne de décharge (16) connectée en parallèle au module de batterie (4) avec une résistance de décharge (18) et un commutateur de décharge (17).

10. Système de batterie à courant élevé selon la revendication 9, **caractérisé en ce que** la ligne de décharge (16) n'est fermée par le commutateur de décharge (17) que lorsque le commutateur de dérivation (7) est en position de dérivation et le module de batterie (4) ponté électriquement par la ligne de dérivation (8) de sorte que le courant de service circule dans la ligne de dérivation (8).

11. Système de batterie à courant élevé selon l'une des revendications précédentes, **caractérisé par** une commande de courant consommateur (13) pour commander le flux de courant dans un consommateur (14) branché sur le système de batterie à courant élevé (1) de telle sorte que le flux de courant dans la ligne de courant de service (5) du système de batterie à courant élevé (1) est inférieur à la valeur limite prédéterminée.

12. Véhicule électrique doté d'un moteur électrique (2), d'une commande du moteur électrique (3) pour commander le moteur électrique (2) et d'un système de batterie à courant élevé (1), **caractérisé en ce que** ledit système de batterie à courant élevé (1) est conçu selon l'une des revendications précédentes.

13. Véhicule électrique selon la revendication 12, **caractérisé en ce que** la commande du moteur électrique (3) permet de commander un courant consommateur circulant entre le système de batterie à courant élevé (1) et le moteur électrique (2) de telle sorte que le courant circulant dans la ligne de courant de service (5) du système de batterie à courant élevé (1) est inférieur à la valeur limite prédéterminée.

14. Procédé de commande d'un système de batterie à courant élevé, notamment d'un système de batterie à courant élevé selon l'une des revendications 1 à 10, comprenant
une électronique de surveillance de batterie (12) et
une pluralité de modules de batterie (4) qui comprennent chacun au moins un élément de batterie rechargeable (10) et qui sont connectés électriquement en série au moyen d'une ligne de courant de service (5) de telle sorte qu'un courant de service circule dans la ligne de courant de service (8) pendant le fonctionnement,
sachant que
un électrolyte et des matériaux actifs sont contenus dans l'élément de batterie (10) pour emmagasiner l'énergie électrique, et l'élément de batterie (10) contient une solution d'électrolyte à base de SO₂,
au moins un des modules de batterie (4) est conçu comme module de batterie de dérivation (6) présentant un commutateur de dérivation (7) et une ligne de dérivation (8) connectée en parallèle avec le module de batterie (4), et
le système de batterie à courant élevé (1) comprend pour chaque module de batterie de dérivation (6) une unité de surveillance de module (11),
**caractérisé par** les étapes suivantes :
a) surveiller le module de batterie (4) au moyen de l'unité de surveillance de module (11) ;
b) détecter une anomalie du module de batterie (4) ;
c) mesurer le flux de courant dans la ligne de courant de service (5) au moyen de l'électronique de surveillance du système de batterie (12) lorsqu'une anomalie d'un module de batterie (4) est détectée par une des unités de surveillance de module (11) ;
d) vérifier si le flux de courant mesuré dans la ligne de courant de service (5) est inférieur à une valeur limite prédéterminée ;
e) si le flux de courant mesuré est inférieur à ladite valeur limite, commuter le commutateur de dérivation (7) d'une position de fonctionnement normal en une position de dérivation de telle sorte que le module de batterie (4) sur lequel une anomalie a été détectée, est ponté électriquement par la ligne de dérivation (8) et le courant de service circule dans la ligne de dérivation (8), en évitant un court-circuit externe de l'élément de batterie (10).

15. Procédé de commande d'un système de batterie à courant élevé selon la revendication 14, le système de batterie à courant élevé (1) comprenant une commande de courant consommateur (13) pour commander le flux de courant dans un consommateur (14) branché sur le système de batterie à courant élevé (1),
**caractérisé par** l'étape supplémentaire suivante :
limiter le flux de courant dans le système de batterie à courant élevé (1) au moyen de la commande de courant consommateur (13) de telle sorte que le flux de courant dans la ligne de courant de service (5) du système de batterie à courant élevé (1) est inférieur à la valeur limite prédéterminée.

16. Procédé selon la revendication 14 ou 15, le module de batterie (4) comprenant un commutateur de décharge (17) et une résistance de décharge (18) disposée dans une ligne de décharge (16) électriquement parallèle au module de batterie (4), et le commutateur de décharge (17) étant disposé dans la ligne de décharge (16),
**caractérisé par** l'étape supplémentaire suivante :
vérifier si le commutateur de dérivation (7) est commuté en position de dérivation de telle sorte que le module de batterie est ponté électriquement par la ligne de dérivation (8) et le courant de service circule dans la ligne de dérivation (8) ;
commuter le commutateur de décharge (17) dans une position de fermeture de telle sorte que le circuit électrique est fermé par la ligne de décharge (16) ;
décharger le module de batterie (4) par l'intermédiaire de la résistance de décharge (17) au moyen d'un flux de courant sortant du module de batterie (4) et passant dans la résistance de décharge (18).
